Europäisches Patentamt

European Patent Office

Office européen des brevets

(11) Numéro de publication: **0 202 182**
**A1**

(12) # DEMANDE DE BREVET EUROPEEN

(21) Numéro de dépôt: **86430009.0**

(22) Date de dépôt: **07.04.86**

(51) Int. Cl.⁴: **F16L 55/16 , B05D 7/22**

(30) Priorité: **12.04.85 FR 8505657**

(43) Date de publication de la demande:
**20.11.86 Bulletin 86/47**

(84) Etats contractants désignés:
**AT BE CH DE GB IT LI LU NL SE**

(71) Demandeur: **Fabbri, Paul**
**4, Les Terres Marines**
**F-13260 Cassis(FR)**

(72) Inventeur: **Fabbri, Paul**
**4, Les Terres Marines**
**F-13260 Cassis(FR)**

(54) **Procédé et installation pour le traitement et/ou le rev tement des surfaces internes des tuyauteries.**

(57) L'invention couvre le procédé, l'installation et avec les mêmes moyens la préparation préalable d'une surface interne d'un tuyau (15) comportant coudes ou dérivations ou changement de diamètres en vue du dépôt ultérieur d'un revêtement genre peinture, vernis ou autres.

Le procédé est caractérisé en ce que l'on dépose à l'entrée du dit tuyau (15) et sur sa surface interne, une couche liquide du milieu de traitement, solution de décapage, de dégraissage, de peinture ou autres sous forme d'une couronne liquide et que l'on force cette couronne à se déplacer le long de la surface en effectuant un déplacement hélicoidal.

Le déplacement de ladite gaine est réalisé par un courant d'air exerçant deux actions. Une action de translation et une action de rotation permettant de maintenir le gaine liquide "appliquée" en permanence au contact intime de la surface à traiter.

L'installation est caractérisée par le fait qu'elle comporte, à l'entrée du tuyau à traiter, un poste de pulvérisation (8), de centrifugation (13) et de ventilation (2) permettant la formation de la couronne liquide et le déplacement de ladite couronne dans un mouvement hélicoïdal restant en permanence au contact de la surface interne y compris dans les coudes ou dérivations.

Les solutions chimiques de décapage, de dégraissage ou autres sont récupérées à la sortie du tuyau et sont réutilisées en circuit fermé. L'excès des solutions de revêtement est récupéré dans un bac (16).

Procédé et installation pour le traitement et/ou le revêtement des surfaces internes des tuyauteries.

La présente invention concerne un procédé et une installation pour le traitement et/ou le revêtement des surfaces internes des tuyauteries.

On entend dans la présente description par traitement de surface interne d'une tuyauterie, les opérations du type dégraissage, décapage et/ou détartrage et on entend par revêtement toute opération visant à réaliser sur la surface interne d'une tuyauterie le dépôt d'une couche protectrice telle qu'une couche de vernis ou de peinture.

De telles opérations sont nécessaires, soit pour maintenir un bon état de surface interne d'une tuyauterie lorsque cette surface a été dégradée en cours d'utilisation par des dépôts ou par une action corrosive (c'est le cas du dégraissage, du décapage et/ou du détartrage), soit pour lui conférer des propriétés lui permettant de résister à de telles agressions (c'est le cas de la réalisation de revêtements internes appropriés).

Les procédés actuellement connus consistent, pour ce qui est des opérations d'entretien, à nettoyer les tuyauteries en y faisant passer par exemple du sable sous l'action d'un courant d'air en vue d'éliminer les dépôts indésirables puis, dans une opération ultérieure, à procéder au dépôt d'un revêtement protecteur.

En ce qui concerne cette seconde opération, les procédés connus comprennent :

a) La galvanisation : c'est un procédé qui est coûteux et qui au surplus nécessite une forte consommation d'énergie ;

b) L'application d'une peinture par des procédés mécaniques qui ne sont satisfaisants que pour autant qu'ils s'appliquent à des tuyauteries de gros diamètres et ne présentant pas de "coudes";

c) L'atomisation du milieu de revêtement à la surface à traiter mais ce procédé ne peut convenir que si cette surface a été préalablement et nécessairement soumise à un traitement de préparation la rendant apte à recevoir le revêtement.

Parmi les procédés appartenant à cette troisième catégorie, on peut citer ceux faisant appel à l'insufflation à l'intérieur du tuyau, sous l'action d'un courant d'air rapide, généralement rectiligne, qui a pour effet de repousser le milieu de revêtement (comme une peinture) à l'état liquide à l'intérieur du tuyau jusqu'à garnir la totalité de cette surface interne. Dans ce dernier cas, la couche de revêtement, bien que satisfaisante, présente toutefois l'inconvénient d'une irrégularité d'épaisseur probablement due auxphénomènesde gravité qui font qu'une plus grande quantité du milieu de revêtement se dépose dans les parties basses du tuyau alors que les parties hautes reçoivent une quantité moindre de ce milieu.

On a également proposé, pour remédier à cet inconvénient, de faire appel à un procédé consistant à créer, à l'intérieur du tuyau à revêtir, un "brouillard" de très fines gouttelettes du milieu de revêtement tout en animant ce brouillard d'un mouvement tourbillonnaire, voire hélicoïdal. Un tel procédé, nécessitant un réglage et une surveillance des conditions opératoires, peut permettre la réalisation de revêtement à l'intérieur des tuyauteries sur une très grande longueur et quelle que soit leur configuration (diamètres variables, coudes, etc). Ces procédés nécessitent aussi une consommation d'énergie relativement importante en ce sens que l'on doit disposer de compresseurs d'air de puissance plus ou moins grande.

La présente invention a pour but de faire en sorte que, quel que soit le milieu de traitement, que celui-ci soit une solution de dégraissage, une solution de décapage ou une solution de détartrage, ce milieu puisse circuler à l'intérieur du tuyau, à l'état liquide, en restant en permanence au contact intime de la surface à traiter. Il s'ensuit que l'invention s'applique avec les mêmes moyens mis en oeuvre aussi bien pour la préparation préalable d'une surface interne en vue du dépôt ultérieur d'un revêtement que pour l'application directe de ce revêtement.

L'invention couvre donc un procédé caractérisé en ce que l'on dépose à l'entrée d'un tuyau à traiter et sur la surface interne de ce tuyau, une couche liquide du milieu de traitement sous la forme d'une couronne annulaire liquide et que l'on force cette couronne liquide à se déplacer le long de cette surface en effectuant un déplacement hélicoïdal.

L'invention couvre également une installation et les moyens pour la mise en oeuvre de ce procédé, cette installation étant essentiellement caractérisée par le fait qu'elle comporte, en amont de l'entrée du tuyau à traiter, un poste de pulvérisation et de centrifugation du milieu à traiter constituant ainsi le moyen de formation de la couronne ou gaine liquide désirée destinée à se déposer à ladite entrée dudit tuyau et un moyen pour déplacer ladite gaine le long dudit tuyau en aval de ladite entrée suivant un mouvement hélicoïdal.

2. Installation pour la mise en oeuvre du procédé selon la revendication 1, caractérisée par le fait qu'elle comporte, en amont de l'entrée du tuyau (15) à traiter, un poste (13) de pulvérisation et de centrifugation du milieu à traiter constituant ainsi le moyen de formation de la couronne ou gaine liquide désirée destinée à se déposer à ladite entrée dudit tuyau et un moyen (ventilateur 2) pour déplacer ladite gaine le long dudit tuyau en aval de ladite entrée suivant un mouvement hélicoïdal.

3. Installation selon la revendication 2, caractérisée en ce que ladite gaine est réalisée par un courant d'air fourni par un ventilateur (2), ce courant d'air exerçant deux actions, à savoir celle de conférer un mouvement de translation à cette gaine et celle de maintenir celle-ci "appliquée" en permanence sur la surface interne à traiter.

Gaine Liquide en déplacement

Gaine Liquide en formation

0 202 182

Gaine liquide en déplacement

Gaine liquide en formation

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 513 546 (OSAKA GAS CO.) * Figures 2-7; page 3, lignes 14-27; page 2, lignes 32-34; page 5, ligne 11 - page 6, ligne 13; page 7, ligne 7-9 * | 1 | F 16 L 55/16 B 05 D 7/22 |
| A | | 2,3 | |
| | --- | | |
| A | FR-A-2 483 265 (NIHON PLANT SERVICE CENTER) * Figures 1-5; revendications * | 2,3 | |
| | ----- | | |

DOMAINES TECHNIQUES RECHERCHES (Int. Cl.4)

F 16 L
B 05 D
B 05 B
B 08 B

Le présent rapport de recherche a été établi pour toutes les revendications

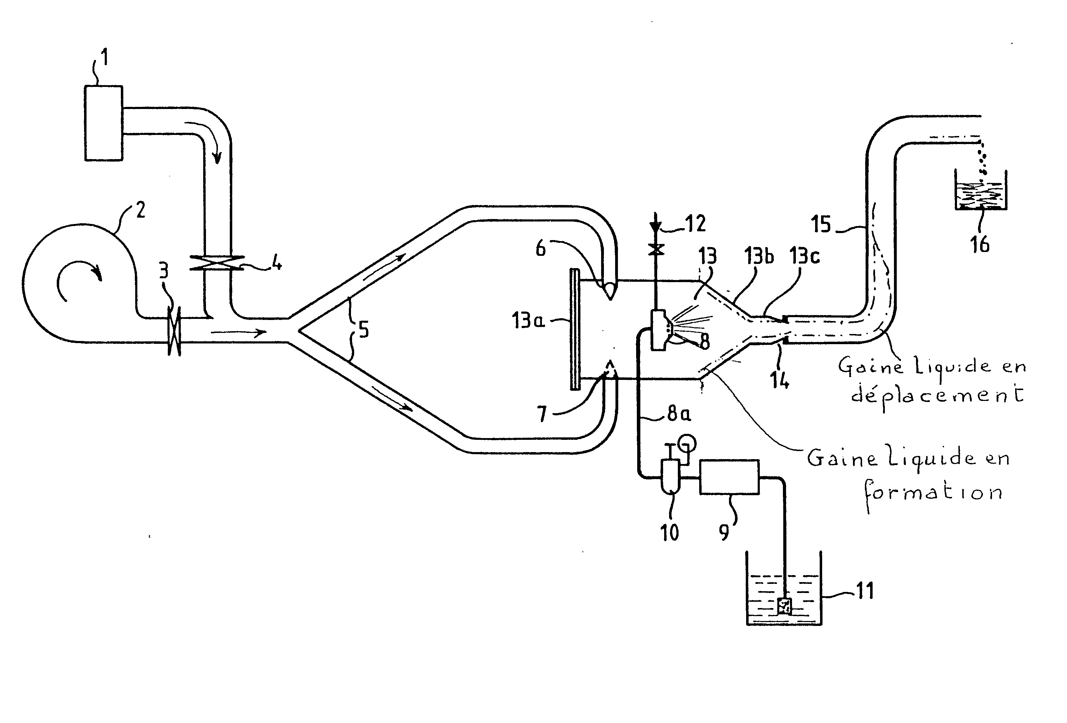

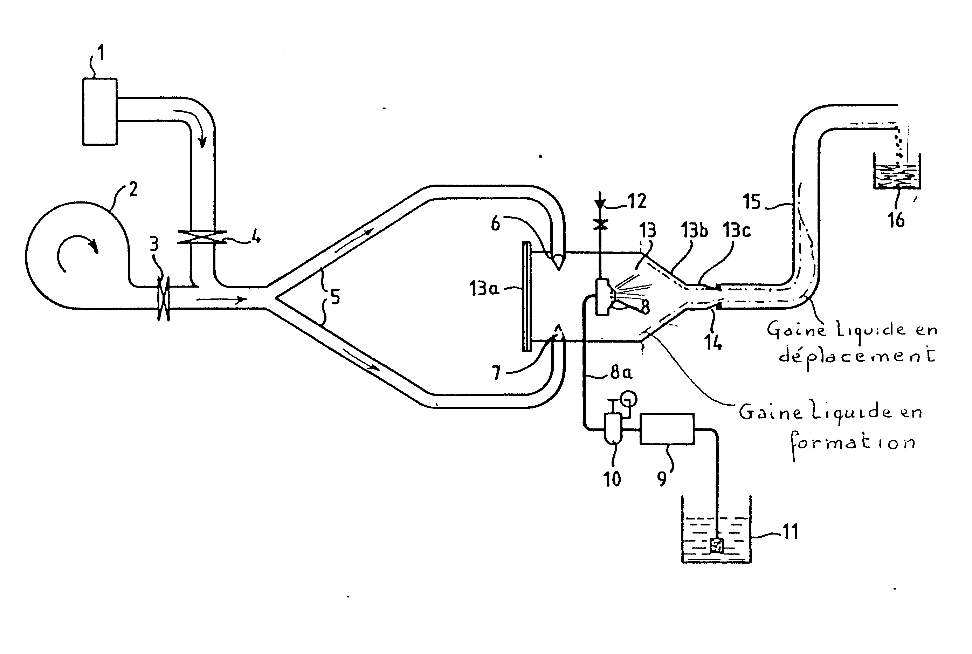

| Lieu de la recherche | Date d'achèvement de la recherche | Examinateur |
|---|---|---|
| LA HAYE | 18-07-1986 | NARMINIO A. |